# EUROPÄISCHE PATENTSCHRIFT

(11) **EP 1 047 168 B1**
(45) Veröffentlichungstag und Bekanntmachung des Hinweises auf die Patenterteilung: **14.06.2006**
(21) Anmeldenummer: 00103603.7
(22) Anmeldetag: 21.02.2000
(51) Int. Cl.: H02B 1/56

(54) **Beheizter Schaltschrank und zugehörige Heizvorrichtung**
Heated switch cabinet and related heating device
Armoire de commutation chauffée et dispositif de chauffage associé

(30) Priorität: 19.04.1999 DE 29906950 U
(43) Veröffentlichungstag der Anmeldung: 25.10.2000
(73) Patentinhaber: DBK David + Baader GmbH, 76870 Kandel (DE)
(72) Erfinder: Buchlaub, N., 76767 Hagenbach (DE); Vetter, L., 76863 Herxheim (DE); Werling, W., 76770 Hatzenbühl (DE)
(74) Vertreter: Grünecker, Kinkeldey, Stockmair & Schwanhäusser Anwaltssozietät

(56) Entgegenhaltungen:
- DE-A- 19 604 218
- DE-U- 9 217 778
- US-A- 4 352 008

## Beschreibung

Die Erfindung betrifft beheizte Schaltschränke und zugehörige Heizvorrichtungen und bezieht sich insbesondere auf solche Heizvorrichtungen für Schaltschränke, die PTC-Elemente umfassen.

Bei einer Vielzahl elektrischer Anlagen ist eine Anzahl elektrischer Schaltelemente zu einer Schaltung zusammengefaßt, die in einem dafür vorgesehenen Schaltschrank angeordnet ist. Die Schaltelemente können elektrische und elektronische Bauteile umfassen, die beispielsweise auf Montageplatten fest angeordnet sind.

Bezüglich der Anordnung der Komponenten in einem Schaltschrank können eine Vielzahl von Randbedingungen vorgegeben sein. Beispielsweise sind kühl- bzw. wärmetechnische, schaltungstechnische aber auch solche Gesichtspunkte zu berücksichtigen, die aus Gründen der Raumersparnis erforderlich sind. Neben den elektrischen und elektronischen Bauelementen umfassen Schaltschränke daher auch eine Vielzahl von mechanischen Komponenten, wie beispielsweise Schwenktafeln, Rahmen, Scharniere und Türen.

Oft sind Schaltschränke im Freien aufgestellt und unterliegen somit erschwerten Betriebsbedingungen, da ein Betrieb der in den Schaltschrank eingebauten Bauelemente über einen weiten Temperaturbereich gewährleistet sein muß. Auch ist die Funktionstüchtigkeit der Schalteinrichtungen unabhängig von allen Witterungseinflüssen zu gewährleisten.

Insbesondere kann es in einem im Freien aufgestellten Schaltschrank zur Frostbildung und damit zur erhöhten Korrosion kommen. Somit ist nicht nur die Funktionstüchtigkeit der Baueinheiten gefährdet, sondern auch die Haltbarkeit der mechanischen Einrichtungen, wie etwa des Gestellrahmens oder der Verriegelungsmechaniken.

Im Freien aufgestellte Schaltschränke werden daher mit Heizvorrichtungen versehen, die eine Klimatisierung des Schaltschrankes vornehmen. Diese Heizvorrichtungen enthalten gewöhnlicherweise PTC-Heizelemente (Positive Temperature Coefficient), die aufgrund des positiven Widerstandstemperaturkoeffizienten zu einer Temperaturselbstbegrenzung führen und somit die Betriebssicherheit der Heizvorrichtung gewährleisten.

Für Schaltschrankheizungen verwendete PTC-Elemente müssen eine hohe Heizleistung zur Verfügung stellen, um das Innere des Schaltschrankes auch bei sehr tiefen Außentemperaturen ausreichend erwärmen zu können. Die PTC-Heizelemente können daher ggf eine sehr hohe Temperatur erreichen.

Dieser Umstand birgt mehrere Nachteile in sich. Zum einen ist den PTC-Elementen und den mit ihnen verbundenen Wärmeleitkörpern ihre gegenwärtige Temperatur nicht anzusehen, so daß eine Person, die Arbeiten am Schaltschrank vornimmt, Gefahr läuft, durch unbeabsichtigte Berührungen Verbrennungen der Haut davonzutragen. Zum anderen ist mit herkömmlichen Heizvorrichtungen für Schaltschränke eine Brandgefahr verbunden, da Kabel, Etiketten oder andere brennbare Teile Berührung mit dem PTC-Element oder einem damit verbundenen Wärmeleitkörper aufnehmen und sich dabei entzünden können.

Aus der Druckschrift DE 19 604 218 A1 ist eine Heizvorrichtung mit einem PTC-Element bekannt, wobei das PTC-Element in einem Profilheizkörper eingebaut ist, der wiederum in einer Profilkammer montiert ist. Die Profilkammer und der Profilkontaktkörper, wie auch dazwischenliegende koaxial zueinander angeordnete Profilringe, sind über Abstandsstege in wärmeleitender Verbindung zueinander, und die Abstandsstege sind so angeordnet, dass sie jeweils symmetrisch zueinander versetzt sind. Auf diese Weise wird zum einen ein Luftkanal erzeugt und zum anderen eine reduzierte und gleichmäßige Ableitung der Wärme bis an die Außenhaut der Heizvorrichtung erreicht.

Die deutsche Gebrauchsmusterschrift DE 92 17 778 U1 betrifft eine Schaltschrankheizung und offenbart einen Heizkörper, der außerhalb eines zugehörigen Thermostatgehäuses angeordnet ist und mittels isolierender Distanzelemente sowie einer thermisch isolierender Strahlungsabschirmung von dem Thermostatgehäuse isoliert ist.

Der Erfindung liegt daher die Aufgabe zugrunde, einen beheizten Schaltschrank sowie eine zugehörige Heizvorrichtung anzugeben, die eine niedrigere Temperatur an berührbaren Teilen der Heizvorrichtung aufweisen.

Diese Aufgabe wird durch die Gegenstände der unabhängigen Patentansprüche gelöst.

Wesentliches Erfindungsmerkmal ist dabei die thermische Trennung zwischen dem inneren Heizkörperprofil und dem äußeren Gehäusemantel. Dabei bleibt die Heizleistung in vollem Umfange erhalten und wird vielmehr durch die auf Konvektion beruhende Kaminwirkung in einem Luftstromkanal effektiv genutzt, der durch Zusammenwirkung des Gehäuseteils und des Wärmeleitkörpers entsteht.

Die thermisch weitgehende Entkopplung zwischen Wärmeleitkörper und Gehäuseteil ermöglicht das gefahrlose Berühren der Heizvorrichtung des Schaltschranks. Außerdem wird in vorteilhafter Weise die Brandgefahr verringert.

Bevorzugte Ausgestaltungen der Erfindung werden in den Unteransprüchen definiert.

Durch das Merkmal der im wesentlichen vertikal angeordneten Rippen des Wärmeleitkörpers wird die Konvektion in vorteilhafter Weise gefördert und die Wärmeabgabe an die Innenluft des Schaltschranks sehr effektiv ermöglicht.

Das Einpressen des PTC-Elements in entsprechende Befestigungsmittel des Wärmeleitkörpers sichert in vorteilhafter Weise eine einfache Herstellbarkeit der Heizvorrichtung und optimiert zugleich die Wärmeabgabe des PTC-Heizelementes an die Innenluft.

Die Wahl des Materials Aluminium zur Herstellung des Wärmeleitkörpers und/oder Gehäuseteils ist aufgrund der hohen Wärmeleitfähigkeit und Korrosionsfestigkeit des Materials vorteilhaft.

Ein besonderer Vorteil ergibt sich daraus, daß der Wärmeleitkörper aus einem Halbmaterial mittels eines Schneidevorgangs in beliebiger Länge herstellbar ist. Dadurch wird eine universelle Längengestaltung der Heizgeräte ohne den Einsatz geänderter Basismaterialien ermöglicht.

In diesem Zusammenhang ist ebenfalls besonders vorteilhaft, daß die Heizvorrichtung mittels ihrer Abdeckplatten an eine Innenwand des Schaltschrankes montierbar ist. Dies ermöglicht die Verwendung bisheriger Abdeckplatten auch bei Änderung der Gesamtlänge der Heizvorrichtung.

Der Vorteil der in den Abdeckplatten vorgesehenen Öffnungen liegt in der Beförderung der Luftkonvektion (Kaminwirkung) durch Bereitstellung von Ein- und Auslässen der zu erwärmenden beziehungsweise bereits erwärmten Luft.

Werden die Abdeckplatten an den Stirnseiten des Gehäuseteils aus Kunststoff gefertigt, so wird damit eine hohe Korrosionsfestigkeit und mechanische Stabilität erreicht, und zugleich wird das Gesamtgewicht der Heizvorrichtung in vorteilhafter Weise verringert. Außerdem können solche Abdeckplatten kostengünstig hergestellt werden.

Die erfindungsgemäße Heizvorrichtung läßt sich in vorteilhafter Weise auch an üblicherweise in Schaltschränken befindliche Hutschienen befestigen. Die Verwendung eines Federbügels hierfür ist aufgrund der einfachen Montierbarkeit mittels einer Schnappverbindung vorteilhaft.

Eine Zugentlastung befördert die Betriebssicherheit.

Die Erfindung wird im folgenden im Zusammenhang mit den beigefügten Zeichnungen erläutert:
Fig. 1 zeigt eine erste Ausgestaltung der Erfindung.
Fig. 2a bis 2c zeigen eine Draufsicht der in Fig. 1 gezeigten Anordnung sowie in Einzeldarstellung den Wärmeleitkörper und das Gehäuseteil.
Fig. 3 zeigt eine zweite Ausgestaltung der Erfindung.
Fig. 4a und 4b zeigen die zweite Ausgestaltung der Fig. 3 in Seitenansicht und Draufsicht.

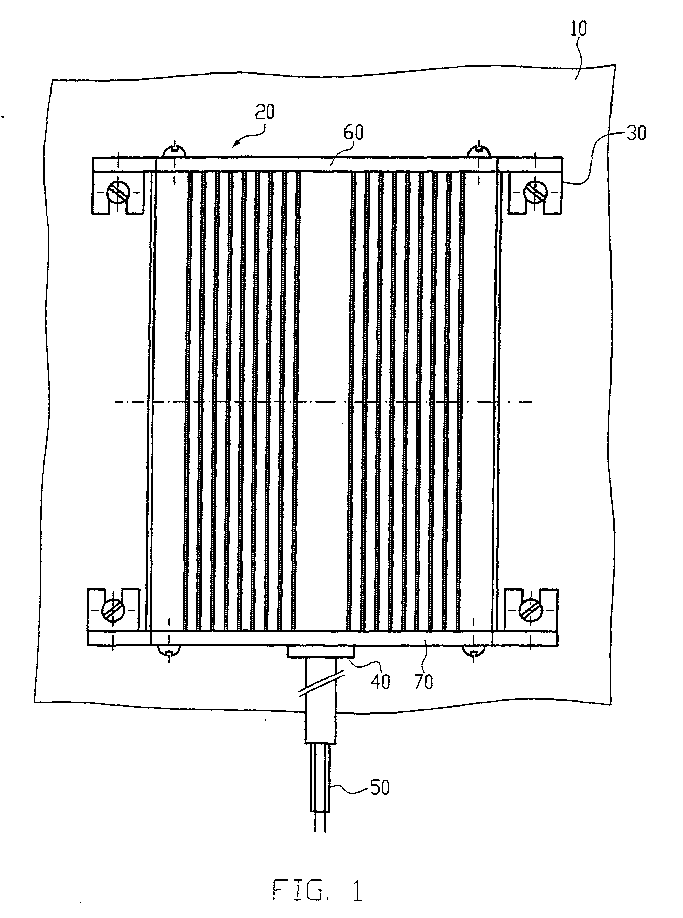

Fig. 1 zeigt eine erste Ausgestaltung der Erfindung. An eine innere Wandung 10 des Schaltschrankes ist die Heizvorrichtung 20 montiert. Hierzu sind die obere und untere Abdeckplatte 60, 70 mittels geeigneter Befestigungsmittel 30 an die Innenwand geschraubt. Die untere Abdeckplatte 70 ist mit einer Zugentlastung 40 verbunden, die das in der Heizeinrichtung befindliche PTC-Element (nicht gezeigt) vor mechanischen Beanspruchungen schützt, die durch die elektrische Zuführung 50 verursacht werden kann. Die Abdeckplatten 60, 70 sind mit dem Gehäuseteil verschraubt.

Die Breite der in Fig. 1 gezeigten Heizvorrichtung beträgt vorzugsweise 110 mm. Die Länge (Höhe) ist beliebig variierbar.

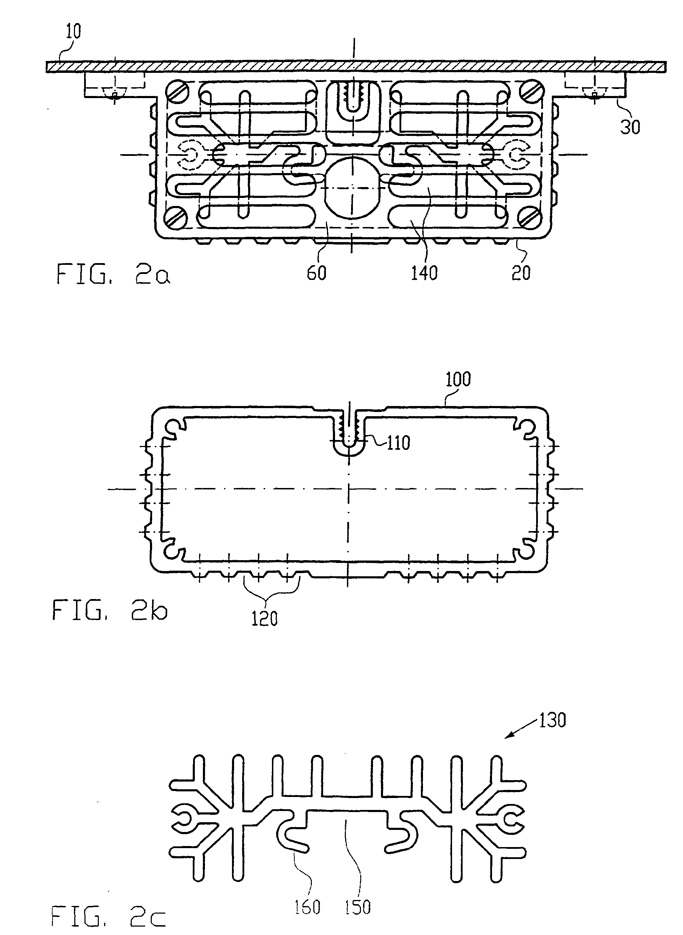

Fig. 2a zeigt die in Fig. 1 dargestellte Heizvorrichtung in Draufsicht. Der Figur ist zu entnehmen, daß die obere Abdeckplatte 60 über Öffnungen 140 verfügt, die ein Durchströmen der erwärmten Luft ermöglichen. Die nicht dargestellte untere Abdeckplatte verfügt ebenfalls über entsprechende Öffnungen.

Der Fig. 2a kann ferner ersehen werden, daß der Wärmeleitkörper von dem Gehäuseteil umschlossen ist. Wärmeleitkörper und Gehäuseteil stehen in keinem direkten wärmeleitenden Kontakt. Hierdurch wird die thermische Trennung zwischen dem inneren Heizkörper und dem äußeren Gehäusemantel erreicht. Dadurch wird die Temperatur des äußeren Gehäuseteils auf einen Wert reduziert, der eine Berührung desselben ermöglicht und eine Brandgefahr ausschließt. Das Gehäuseteil und der Wärmeleitkörper werden in den Fig. 2b und 2c separat dargestellt.

Das Gehäuseteil weist im wesentlichen einen rechteckigen Querschnitt auf und besteht vorzugsweise aus eloxiertem Aluminium. In den Innenkanten sind Gewinde zur Befestigung der Abdeckplatten vorgesehen. Die Außenseite ist durch Wellrinnen 120 strukturiert. Ferner können weitere Befestigungsmittel 110 vorgesehen sein.

In der Fig. 2c ist der Wärmeleitkörper 130 dargestellt, der eine Vielzahl von verschiedentlich geformten Rippen aufweist, die der Oberflächenvergrößerung dienen. Mit dem Bezugszeichen 150 ist die Position des einzupressenden PTC-Elementes (nicht gezeigt) angegeben. Hierzu weist der Wärmeleitkörper geeignete Zangenelemente 160 vor. Auch der Wärmeleitkörper ist vorzugsweise aus eloxiertem Aluminium gefertigt. Der in Fig. 2c im Profil gezeigte Wärmeleitkörper kann in beliebiger Länge durch Abschneiden von einem Halbmaterialstab dieses Profils hergestellt werden. Der Schneidevorgang kann dabei beispielsweise durch Sägen oder jede andere geeignete Maßnahme erfolgen.

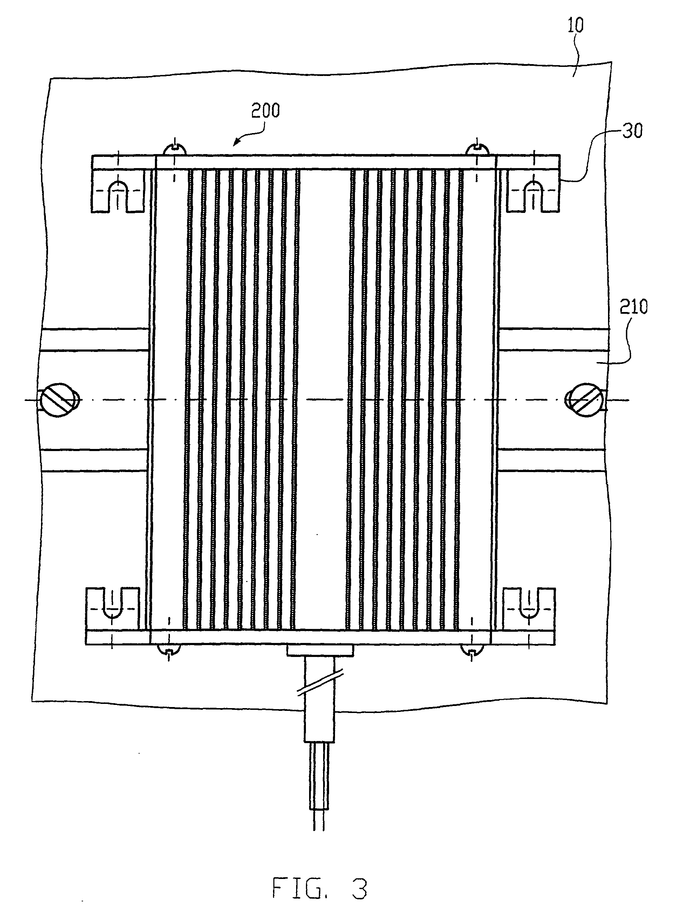

In der Fig. 3 ist eine zweite Ausgestaltung der Erfindung angegeben. Die Heizvorrichtung 200 ist dabei mit der Innenwand 10 des Schaltschranks nicht mittels Befestigungsmittel 30 verschraubt, sondern ist der Hutschiene (DIN-Schiene) 210 aufgeschnappt.

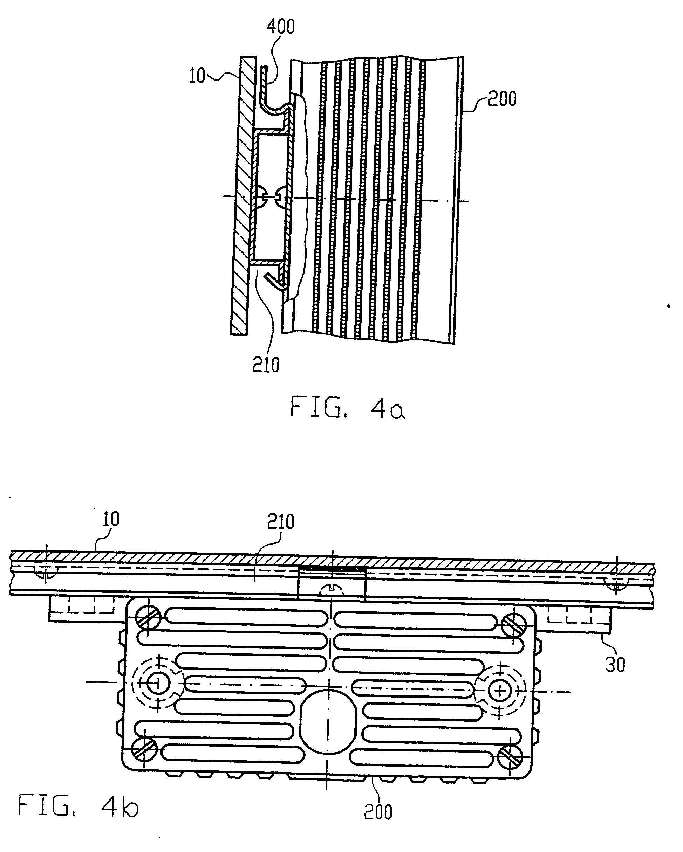

Diese Schnappbefestigung wird in Fig. 4a näher erläutert. Demnach wird ein Federbügel 400 verwendet, um die Heizvorrichtung 200 auf die Schiene 210 aufzustecken. Der Federbügel 400 besteht vorzugsweise aus Federstahl, kann jedoch auch aus Aluminium Messing oder Kunststoff gefertigt sein.

Die Montage der erfindungsgemäßen Heizvorrichtung unter Verwendung einer Hutschiene 210 kann ebenfalls aus Fig. 4b ersehen werden, die die Heizvorrichtung der zweiten Ausgestaltung der Erfindung in Draufsicht darstellt.

## Patentansprüche

1. Heizvorrichtung für einen Schaltschrank, umfassend:
wenigstens ein PTC-Element,
einen mit dem PTC-Element in wärmeleitendem Kontakt stehenden Wärmeleitkörper (130) und
ein das PTC-Element und den Wärmeleitkörper umschließendes Gehäuseteil (100),
**dadurch gekennzeichnet,**
**dass** der Wärmeleitkörper und das Gehäuseteil in keinem direkten wärmeleitenden Kontakt zueinander stehen, um thermisch weitgehend entkoppelt zu sein, und
**dass** sie hinsichtlich ihrer Raumform so ausgestaltet sind, dass sie gemeinsam einem Luftstromkanal ausbilden.

2. Heizvorrichtung nach Anspruch 1, wobei der Wärmeleitkörper eine Vielzahl von vertikal ausgerichteten Rippen aufweist, die zusammen mit der Innenwand eines im wesentlichen rohrförmigen Gehäuseteils den Luftstromkanal bilden.

3. Heizvorrichtung nach Anspruch 1 oder 2, wobei der Wärmeleitkörper Mittel zum Halten des PTC-Elementes aufweist und das PTC-Element in diese Mittel einpressbar ist.

4. Heizvorrichtung nach einem der Ansprüche 1 bis 3, wobei der Wärmeleitkörper aus eloxiertem Aluminium besteht.

5. Heizvorrichtung nach einem der Ansprüche 1 bis 4, wobei der Wärmeleitkörper und das Gehäuseteil so ausgestaltet sind, dass sie von einem Halbmaterial mittels eines Schneidevorgangs in beliebiger Lange abtrennbar sind.

6. Heizvorrichtung nach einem der Ansprüche 1 bis 5, wobei die Heizvorrichtung eine Abdeckplatte (60) an der oberen Stirnfläche des Gehäuseteils umfasst, die Öffnungen aufweist, welche einen Auslass für den Luftstromkanal bilden.

7. Heizvorrichtung nach einem der Ansprüche 1 bis 6, wobei die Heizvorrichtung eine Abdeckplatte (70) an der unteren Stirnfläche des Gehäuseteils umfasst, die Öffnungen aufweist, welche einen Einlass für den Luftstromkanal bilden.

8. Heizvorrichtung nach Anspruch 6 oder 7, wobei die Abdeckplatte aus Kunststoff besteht.

9. Heizvorrichtung nach einem der Ansprüche 6 bis 8, wobei die Abdeckplatte mit einer Wandung des Schaltschranks verschraubbar ist.

10. Heizvorrichtung nach einem der Ansprüche 1 bis 9, wobei das Gehäuseteil aus eloxiertem Aluminium besteht.

11. Heizvorrichtung nach einem der Ansprüche 1 bis 10, ferner eine Zugentlastung für elektrische Verbindungsleitungen (50) des PTC-Elementes umfassend.

12. Schaltschrank, umfassend:
Schalteinrichtungen und eine Heizvorrichtung (20, 200) nach einem der Ansprüche 1 bis 11.

13. Schaltschrank nach Anspruch 12, ferner eine mit einer Wandung (10) des Schaltschrankes verbundene Hutschiene (210) umfassend, wobei die Heizvorrichtung mittels eines Federbügels (400) an der Hutschiene befestigbar ist.

## Claims

1. Heating device for a switching cabinet, comprising:
- at least one PTC element
- a heat-conducting body (130) in heat-conducting contact with the PTC element, and
- a housing part (100) enclosing the PTC element and the heat-conducting body, **characterised in that** the heat-conducting body and the housing part are not in heat-conducting contact with one another in order to be substantially thermally decoupled, and **in that** their spatial configuration is such that together they form an air-flow channel.

2. Heating device according to claim 1, wherein the heat-conducting body has a large number of vertically aligned fins, which together with the inner wall of a substantially tubular housing part form the air-flow channel.

3. Heating device according to claim 1 or 2, wherein the heat-conducting body has means for holding the PTC element and the PTC element may be pressed into these means.

4. Heating device according to one of claims 1 to 3, wherein the heat-conducting body consists of anodised aluminium.

5. Heating device according to one of claims 1 to 4, wherein the heat-conducting body and the housing part are so formed that they may be cut off to any length from a semi-finished material by means of a cutting operation.

6. Heating device according to one of claims 1 to 5, wherein the heating device has a cover plate (60) on the upper end face of the housing part, which cover plate has apertures forming an outlet for the air-flow channel.

7. Heating device according to one of claims 1 to 6, wherein the heating device comprises a cover plate (70) on the lower end face of the housing part, which cover plate has apertures forming an inlet for the air-flow channel.

8. Heating device according to claim 6 or 7, wherein the cover plate consists of plastics material.

9. Heating device according to one of claims 6 to 8, wherein the cover plate may be screwed to a wall of the switching cabinet.

10. Heating device according to one of claims 1 to 9, wherein the housing part consists of anodised aluminium.

11. Heating device according to one of claims 1 to 10, further comprising a strain relief for electrical connecting lines (50) of the PTC element.

12. Switching cabinet, comprising:
- switching devices and a heating device (20, 200) according to one of claims 1 to 11.

13. Switching cabinet according to claim 12, further comprising a top hat rail (210) connected to a wall of the switching cabinet, wherein the heating device may be fixed to the top hat rail by means of a spring clip (400).

## Revendications

1. Dispositif de chauffage pour une armoire de distribution, comportant :
au moins un élément CTP,
un corps thermoconducteur (130) en contact thermoconducteur avec l'élément CTP et
une partie de carter (100) entourant l'élément CTP et le corps thermoconducteur,
**caractérisé en ce que**
le corps thermoconducteur et la partie de carter ne sont pas en contact thermoconducteur direct, pour être en grande partie découplés thermiquement, et
ils sont réalisés avec une forme tridimensionnelle de telle sorte qu'ils forment conjointement un canal de circulation d'air.

2. Dispositif de chauffage selon la revendication 1, dans lequel le corps thermoconducteur comporte une pluralité de nervures orientées verticalement qui, conjointement avec la paroi intérieure d'une partie de carter sensiblement tubulaire, forment le canal de circulation d'air.

3. Dispositif de chauffage selon la revendication 1 ou 2, dans lequel le corps thermoconducteur comporte des moyens destinés à maintenir l'élément CTP et l'élément CTP peut être pressé dans ces moyens.

4. Dispositif de chauffage selon l'une des revendications 1 à 3, dans lequel le corps thermoconducteur est réalisé en aluminium anodisé.

5. Dispositif de chauffage selon l'une des revendications 1 à 4, dans lequel le corps thermoconducteur et la partie de carter sont réalisés de telle sorte qu'ils peuvent être coupés à la longueur voulue dans un matériau semi-fini par un processus de coupe.

6. Dispositif de chauffage selon l'une des revendications 1 à 5, dans lequel le dispositif de chauffage comporte une plaque de recouvrement (60) sur la face frontale supérieure de la partie de carter, laquelle plaque comporte des orifices qui forment une sortie pour le canal de circulation d'air.

7. Dispositif de chauffage selon l'une des revendications 1 à 6, dans lequel le dispositif de chauffage comporte une plaque de recouvrement (70) sur la face frontale inférieure de la partie de carter, laquelle plaque comporte des orifices qui forment une admission pour le canal de circulation d'air.

8. Dispositif de chauffage selon la revendication 6 ou 7, dans lequel la plaque de recouvrement est réalisée en matière plastique.

9. Dispositif de chauffage selon l'une des revendications 6 à 8, dans lequel la plaque de recouvrement peut être vissée à une paroi de l'armoire de distribution.

10. Dispositif de chauffage selon l'une des revendications 1 à 9, dans lequel la partie de carter est réalisée en aluminium anodisé.

11. Dispositif de chauffage selon l'une des revendications 1 à 10, comportant en outre un dispositif de décharge de traction pour les lignes de liaison électriques (50) de l'élément CTP.

12. Armoire de distribution, comportant des dispositifs de commande et un dispositif de chauffage (20, 200) selon l'une des revendications 1 à 11.

13. Armoire de distribution selon la revendication 12, comportant en outre un rail en U renversé (210), assemblé à une paroi (10) de l'armoire de distribution, le dispositif de chauffage pouvant être fixé contre le rail en U renversé au moyen d'un étrier à ressort (400).
